# EUROPÄISCHE PATENTSCHRIFT

(11) **EP 1 228 117 B1**
(45) Veröffentlichungstag und Bekanntmachung des Hinweises auf die Patenterteilung: **04.06.2003**
(21) Anmeldenummer: 00964264.6
(22) Anmeldetag: 02.10.2000
(51) Int. Cl.: C08G 63/66

(54) **POLYESTER-POLYETHERBLOCKCOPOLYMERE**
POLYESTER-POLYETHER BLOCK COPOLYMERS
COPOLYMERES BLOCS DE POLYESTER-POLYETHER

(30) Priorität: 12.10.1999 DE 19949091
(43) Veröffentlichungstag der Anmeldung: 07.08.2002
(73) Patentinhaber: BASF AKTIENGESELLSCHAFT, 67056 Ludwigshafen (DE)
(72) Erfinder: BAUER, Stephan, 49179 Ostercappeln (DE); GROSCH, Georg, Heinrich, 67098 Bad Dürkheim (DE); TISCHER, Gerlinde, 01945 Ruhland (DE); HARRE, Kathrin, 01109 Dresden (DE); BAUM, Eva, 01987 Schwarzheide (DE); OSTROWSKI, Thomas, 44581 Castrop-Rauxel (DE); LORENZ, Reinhard, 48366 Laer (DE); PRETZSCH, Regina, 01987 Schwarzheide (DE); PCOLINSKI, Michael, Bloomfield, MI 48301 (US); DINSCH, Stefan, 01993 Schipkau (DE); ROTERMUND, Inge, D-01990 Ortrand (DE)
(86) Internationale Anmeldenummer: EP0009628
(87) Internationale Veröffentlichungsnummer: WO01027185

(56) Entgegenhaltungen:
- EP-A- 0 821 019
- EP-A- 0 862 947
- US-A- 3 652 713
- US-A- 3 849 515

## Beschreibung

Gegenstand der Erfindung sind Hydroxylgruppen enthaltende Polyether-Polyester-Blockcopolymere, ihre Herstellung sowie ihre Verwendung, insbesondere zur Herstellung von Polyurethanen.

Polyurethane werden in großen Mengen hergestellt. Ihre Herstellung erfolgt üblicherweise durch Umsetzung von Polyisocyanaten mit Verbindungen mit mindestens zwei mit Isocyanatgruppen reaktiven Wasserstoffatomen, insbesondere Polyetheralkoholen und/oder Polyesteralkoholen. Für verschiedene Anwendungsfälle wäre es vorteilhaft, sowohl Ethergruppen als auch Estergruppen in das Polyurethan einzubauen. Auf Grund der Unverträglichkeit von Polyetheralkoholen und Polyesteralkoholen untereinander ist es jedoch kaum möglich, diese beiden Verbindungen nebeneinander in Polyurethan-Rezepturen einzusetzen. Eine Möglichkeit, diesem Nachteil abzuhelfen, wäre der Einsatz von Polyolen, die beide Gruppierungen im Molekül enthalten. In EP-A-671 424 wird ein Verfahren zur Herstellung von Ether- und Estergruppen enthaltenden Polyolen durch Umsetzung von Polyetheralkoholen mit mehrfunktionellen Carbonsäuren beschrieben. Nachteilig bei diesem Verfahren ist jedoch, daß bereits bei der Herstellung die Viskosität sehr stark ansteigt und die entstehenden Produkte eine hohe Viskosität und hohe Molekulargewichte aufweisen.

Für die übliche Herstellung von Polyetheralkoholen durch basenkatalysierte oder säurekatalysierte Alkylenoxidaddition können derzeit nur Starter verwendet werden, die gegenüber der eingesetzten Base, in der Regel Kaliumhydroxid oder Lewis-Säuren, stabil sind. Übliche Starter sind beispielsweise Glycerin, Zucker, Glykol. Polyesterole können aufgrund der gegenüber wäßrigen Basen und Säuren instabilen Esterbindung nicht als Starter eingesetzt werden.

Die basen- oder säurekatalysierte Alkylenoxid-Addition an Polyesteralkohole würde zu einer Spaltung der Polyesterolkette und zur Verseifung des Polyesterpolyols bis hin zu seinen Ausgangskomponenten führen, d.h. es könnte bei der sich anschließenden Alkylenoxidaddition nicht die gewünschte Blockstruktur erhalten werden. Die so entstandenen Polyester-Polyetherpolyol-Spaltprodukte sind nur schwer zu reproduzieren und weisen keine definierte Blockstruktur auf.

Es wäre jedoch wünschenswert, Polyole mit Ethergruppen und Estergruppen im Molekül bereitzustellen, die nach einfachen Verfahren herzustellen sind und nicht die Nachteile der Umsetzungsprodukte von Polyetheralkoholen mit mehrfunktionellen Carbonsäuren aufweisen.

Überraschenderweise hat sich gezeigt, daß bei Verwendung von Multimetallcyanidverbindungen, sogenannte DMC-Katalysatoren, zur Polymerisation von Alkylenoxiden, Polyesterole als Startsubstanzen eingesetzt werden können, ohne daß es zu einer Spaltung der Estergruppen in den Polyesterolen kommt.

Gegenstand der Erfindung sind demzufolge Polyester-Polyetherblockcopolymere, herstellbar durch katalytische Anlagerung von Alkylenoxiden an H-funktionelle Startsubstanzen, wobei als H-funktionelle Startsubstanzen Polyesteralkohole und als Katalysatoren Multimetallcyanidverbindungen eingesetzt werden. Die so erhaltenen Produkte enthalten vorzugsweise Hydroxylgruppen.

Gegenstand der Erfindung sind weiterhin ein Verfahren zur Herstellung der Polyester-Polyetherblockcopolymere sowie deren Verwendung zur Herstellung von Polyurethanen durch Umsetzung mit Polyisocyanaten.

Überraschenderweise gelingt die definierte Herstellung der erfindungsgemäßen Polyester-Polyetherblockcopolymere durch Addition von Alkylenoxiden an Polyesteralkohole unter Verwendung von Multimetallcyanid-Katalysatoren ohne Rückspaltung der Polyesteralkohole und sonstige Nebenreaktionen. Die erfindungsgemäßen Polyester-Polyetherblockcopolymere weisen eine enge Molgewichtsverteilung und einen geringen Gehalt an ungesättigten Bestandteilen auf.

Die als Einsatzprodukte zur Herstellung der Polyester-Polyetherblockcopolymere verwendeten Polyesteralkohole können nach den hierfür üblichen Verfahren hergestellt werden.

Zumeist werden die als Einsatzprodukte zur Herstellung der erfindungsgenmäßen Polyester-Polyetherblockcopolymere verwendeten Polyesteralkohole durch Polykondensation von mindestens difunktionellen Carbonsäuren mit mindestens difunktionellen Alkoholen hergestellt. Die Polyesterole können auch durch Polykondensation oder -addition von aliphatischen, cycloaliphatischen, araliphatischen und/oder aromatischen Carbonsäurederivaten mit aliphatischen, cycloaliphatischen, araliphatischen und/oder aromatischen Alkoholen hergestellt werden.

Als Carbonsäurederivate werden bevorzugt Verbindungen mit mindestens zwei Carboxylgruppen, wie Maleinsäure, Fumarsäure, Malonsäure, Adipinsäure, Glutarsäure, Bernsteinsäure, Pimelinsäure, Korksäure, Azelainsäure, Sebacinsäure, Phthalsäure, Isophthalsäure, Terephthalsäure, Trimellitsäure, Trimesinsäure und/oder deren Anhydride und/oder deren Säurechloride verwendet.

Als Alkohole werden bevorzugt Verbindungen mit mindestens zwei Hydroxylgruppen, wie Butandiol, Neopentylglykol, Pentandiol, Hexandiol, Trimethylolpropan, Pentaerythrit, Glyzerin, Ethylenglykol und ihre höheren Homologen, wie Diethylenglykol, Triethylenglykol, Propylenglykol und ihre höheren Homologen, wie Dipropylenglykol und Tripropylenglykol verwendet.

Ebenfalls können Hydroxycarbonsäuren und/oder deren Derivate wie Lactone mit sich selber und/oder mit den genannten Carbonsäurederivaten und/oder Alkoholen umgesetzt werden. Beispielhaft zu nennen sind Glykolsäure, Milchsäure, Hydroxypropionsäure, Hydroxybuttersäure und Hydroxyvaleriansäure.

Als Startsubstanz besonders bevorzugte Polyesteralkohole sind solche auf Basis von Adipinsäure und/oder Phthalsäureanhydrid und Monoethylenglykol, Diethylenglykol und/oder Triethylenglykol, Monopropylenglykol und/oder Dipropylenglykol und/oder Tripropylenglykol.

Neben den genannten Säuren eignen sich ebenso Fettsäurederivate, insbesondere dimere Fettsäurederivate, wie sie beispielsweise von der Firma UNICHEMA unter dem Namen Pripol® vertrieben werden, Derivate auf der Basis von Rizinusöl und Polyhydroxyfettsäure, wie beispielsweise Polyhydroxyfettsäure PHF 110 von der Firma Harburger Fettchemie. Weiterhin geeignet sind α,β-ungesättigte Carbonsäuren, insbesondere hydroxyfunktionalisierte α,β-ungesättigte Carbonsäuren.

Neben der direkten Umsetzung sind auch Varianten der Veresterung bzw. Umesterung bekannt.

Gegebenenfalls können in geringen Mengen monofunktionale Alkohole oder Carbonsäuren bei der Synthese mitverwendet werden.

Darüber hinaus können die Carbonsäuren und Alkohole gegebenenfalls weitere funktionelle Gruppen wie Alkyl-, Aryl-, Amino,-Sulfonat-, Thio-, Phosphonat-, Acrylatgruppen besitzen.

Bevorzugt zur Herstellung der Polyesterole ist die Umsetzung von Alkoholen mit freien Carbonsäuren. Üblicherweise führt man die Polykondensationsreaktion bei Temperaturen von 140 bis 250°C unter Normaldruck oder vermindertem Druck durch. Gegebenenfalls werden die Umsetzungen katalysiert, vorzugsweise unter Verwendung von Säuren, Lewis-Säuren und Metallsalzen, insbesondere von Titanund/oder Zinn enthaltenden Veresterungskatalysatoren, beispielsweise n-Butyltitanat, Zinn-II-octoat oder Zinndilaurat. Dabei wird die Destillation des Reaktionswassers vorzugsweise solange durchgeführt, bis das Reaktionsgemisch eine Säurezahl von <10 mgKOH/g, besonders bevorzugt <3 mgKOH/g und insbesondere <1 mgKOH/g aufweist. Prinzipiell ist auch der Einsatz von Polyesteralkoholen mit höheren Säurezahlen möglich da die überschüssigen Säuregruppen mit den Alkylenoxiden reagieren. In einer weiteren Ausführungsform kann die Reaktion unter Inertgas, wie Stickstoff oder Argon, durchgeführt werden, um Produktverfärbungen durch Oxidationsprodukte zu verhindern. Je nach Verwendung der Polyesterpolyole wiesen diese eine Hydroxylzahl von 0,5 bis 500 mgKOH/g, bevorzugt zwischen 10 bis 400 mgKOH/g, und insbesondere zwischen 30 bis 300 mgKOH/g, auf.

Eine zusammenfassende Übersicht über die Herstellung von Polyesterolen und deren Verwendung zur Herstellung von Polyurethanen, insbesondere Polyurethanschaumstoffen, wird beispielsweise im Kunststoff-Handbuch, Band VII, "Polyurethane" 3. Auflage 1993, herausgegeben von Dr. G. Oertel (Carl-Hanser-Verlag, München) gegeben.

Sollen die erfindungsgemäßen Polyesterol-Polyetherblockcopolymere zur Herstellung von Polyurethanweichschaumstoffen verwendet werden, so werden zu ihrer Herstellung besonders bevorzugt Polyesteralkohole, die eine Viskosität im Bereich von 1000 bis 40000 mPa*s bei 25°C aufweisen, eingesetzt. Insbesondere werden Polyesterole auf Basis von Propylenglykol und/oder Ethylenglykol und/oder deren höheren Homologen verwendet.

Die Herstellung der erfindungsgemäßen Polyester-Polyetherblockcopolymere erfolgt durch Anlagerung von Alkylenoxiden an die Polyesteralkohole unter Verwendung von Multimetallcyanid-Katalysatoren.

Als Alkylenoxide können beispielsweise Ethylenoxid, 1,2-Epoxypropan (Propylenoxid), 1,2-Methyl-1,2-ethoxypropan, 1,2-Epoxybutan, 2,3-Epoxybutan (Butylenoxid), 1,2-Methyl-3-ethoxybutan, 1,2-Epoxypentan, 1,2-Methyl-3-ethoxypentan, 1,2-Epoxyhexan, 1,2-Epoxyheptan, 1,2-Epoxyoctan, 1,2-Epoxynonan, 1, 2-Epoxydecan, 1,2-Epoxyundecan, 1,2-Epoxydodecan, Styroloxid, 1,2-Epoxycyclopentan, 1, 2-Epoxycyclohexan, (2,3-Epoxypropyl) benzol, Vinyloxiran, 3-Phenoxy-1,2-epoxypropan, 2,3-Epoxypropylmethylether, 2,3-Epoxypropylethylether, 2,3-Epoxypropylisopropylether, 2,3-Epoxyl-1-propanol, (3,4-Epoxybutyl)stearat, 4,5-Epoxypentylacetat, 2,3-Epoxylpropanmethacrylat, 2,3-Epoxylpropanacrylat, Gylcidylbutyrat, Metylglycidat, Ethyl-2,3-epoxybutanoat, 4-(Trimethylsilyl) butan-1,2-epoxid, 4-(Triethylsilyl)butan-1,2-epoxid, 3-(Perfluoromethyl)propenoxid, 3-(Perfluoroethyl)propenoxid, 3-(Perfluorobutyl)propenoxid, 4-(2,3-Epoxypropy)morpholin, 1-(Oxiran-2-ylmethyl)pyrrolidin-2-on, sowie deren beliebige Mischungen untereinander, eingesetzt werden.

Vorzugsweise eingesetzt werden Ethylenoxid, Propylenoxid, Butylenoxid sowie Mischungen daraus.

Alkylenoxide können einzeln in Form von sogenannten Blöcken und bei Verwendung von mehr als zwei verschiedenen Alkylenoxiden in jedem beliebigen Mischungsverhältnis als Mischungblöcke angelagert werden. Darüber hinaus kann das Alkylenoxidmischungsverhältnis sowohl diskontinuierlich als auch kontinuierlich während der Synthese variiert werden.

Als Multimetallcyanidkatalysatoren werden zumeist solche der allgemeinen Formel (I) eingesetzt,

M¹ ₐ[M²(CN)_{b}(A)_{c}]_{d} · fM¹gXₙ · h(H2O) · eL (I),

wobei
- M1: ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
- M2: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M1 und M2 gleich oder verschieden sind,
- A: ein Anion, ausgewählt aus der Gruppe, enthaltend Halogenid, Hydroxyd, Sulfat, Carbonat, Cyanid, Thiocyanat. Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole, Aldehyde, Ketone, Ether, Polyether, Ester, Harnstoffe, Amide, Nitrile und Sulfide,
bedeuten, sowie
a, b, c, d, g und n so ausgewählt sind, daß die Elektroneutralität der Verbindung gewährleistet ist, und
- e: die Koordinationszahl des Liganden,
- f: eine gebrochene oder ganze Zahl größer oder gleich 0
- h: eine gebrochene oder ganze Zahl größer oder gleich 0
bedeuten.

Die Herstellung dieser Verbindungen erfolgt nach allgemein bekannten Verfahren, indem man die wäßrige Lösung eines wasserlöslichen Metallsalzes mit der wäßrigen Lösung einer Hexacyanometallatverbindung, insbesondere eines Salzes oder einer Säure, vereinigt und dazu während oder nach der Vereinigung einen wasserlöslichen Liganden gibt.

Zur Herstellung der erfindungsgemäßen Polyester-Polyetherblockcopolymere werden die Polyesteralkohole zunächst mit dem Katalysator vermischt und zu dieser Mischung das Alkylenoxid beziehungsweise die Mischung der Alkylenoxide dosiert. Um die Mischbarkeit des Alkylenoxids in höherviskosen Polyestern und damit die Alkoxidation zu verbessern, werden der Reaktionsmischung gegebenenfalls Lösemittel, wie beispielsweise Toluol, Xylol, Tetrahydrofuran, Aceton, 2-Methylpentanon, Cyclohexanon, N-Methylpyrrolidon oder Dimethylformamid, zugesetzt.

Die Umsetzung der Polyesteralkohole mit den Alkylenoxide wird vorzugsweise bei Drücken im Bereich von 1 bis 20 bar, insbesondere zwischen 2 bis 10 bar, und Temperaturen im Bereich von 60 bis 150°C, insbesondere zwischen 80 bis 130°C, durchgeführt. Weiterhin bevorzugt wird die Herstellung unter Schutzgasatmosphäre, insbesondere unter Stickstoff- und/oder Argonatmosphäre, durchgeführt. Nach Beendigung der Alkylenoxidzugabe schließt sich zumeist eine Nachreaktionsphase an, um eine vollständige Umsetzung der Alkylenoxide zu erreichen. Danach erfolgt die Aufarbeitung der Polyester-Polyetherblockcopolymere.

Nebenverbindungen, wie nicht umgesetzte Monomere und leicht flüchtige Verbindungen können nach verschiedenen, dem Fachmann bekannten Methoden, entfernt werden, wie beispielsweise durch Destillation, Aufarbeitung mittels eines Dünnschichtverdampfers, Stickstoff- und/oder Wasserdampfstripping.

Gegebenenfalls können Schwebstoffe und Feststoffe durch verschiedene, dem Fachmann bekannte Methoden, wie beispielsweise Zentrifugieren oder Filtration, aus dem Reaktionsgemisch entfernt werden.

Bei beistimmten Anwendungen der erfindungsgemäßen Polyester-Polyether-Copolymeren kann der Katalysator auch im Endprodukt verbleiben.

Die erfindungsgemäßen Polyester-Polyetherblockcopolymere können vorzugsweise zur Herstellung von Polyurethanen, insbesondere von Polyurethan-Hartschaumstoffen, Polyurethan- Weichschaumstoffen und zu thermoplastischen Polyurethanen, verwendet werden. Die Herstellung der Polyurethane erfolgt nach an sich bekannten Verfahren durch Umsetzung der Polyole mit Polyisocyanaten. Je nach den angestrebten Eigenschaften der Polyurethane ist es möglich, die erfindungsgemäßen Polyester-Polyetherblockcopolymere allein oder gemeinsam mit anderen Verbindungen mit mindestens zwei mit Isocyanatgruppen reaktiven Wasserstoffatomen einzusetzen. Als Verbindungen mit mindestens zwei mit Isocyanatgruppen reaktiven Wasserstoffatomen, die gemeinsam mit den erfindungsgemäßen Polyester-Polyetherblockcopolymeren mit Polyisocyanaten umgesetzt werden können, gehören die Polyetheralkohole, Polyesteralkohole, sowie gegebenenfalls zwei- oder mehrfunktionelle Alkohole und Amine mit einem Molekulargewicht im Bereich zwischen 62 und 1000 g/mol, sogenannte Kettenverlängerer und Vernetzer. Weiterhin können Katalysatoren, Treibmittel sowie die üblichen Hilfsmittel und/oder Zusatzstoffe eingesetzt werden.

Derartige Verbindungen sowie Verfahren zur Herstellung der Polyurethane werden beispielsweise im Kunststoff-Handbuch, Band VII, "Polyurethane" 3. Auflage 1993, herausgegeben von Dr. G. Oertel (Carl-Hanser-Verlag, München) beschrieben.

Überraschenderweise wurde festgestellt, daß die erfindungsgemäßen Polyester-Polyetherblockcopolymere die Verträglichkeit zwischen Polyesterolen und Polyetherolen erhöhen. Üblicherweise phasenseparieren sich Mischungen aus Polyesterolen und Polyetherolen, so daß solche Mischung in der Technik nur sehr selten verarbeitet werden können. Die Entmischungen führen zu Inhomogenitäten im Schaum, wie Schlierenbildung, Rißbildung an der Phasengrenze.

Solche Schäume sind nicht brauchbar. Überraschenderweise sind Mischungen aus Polyesteralkoholen und Polyetheralkoholen phasenstabil. wenn zusätzlich mindestens ein erfindungsgemäßes Polyester-Polyetherblockcopolymer als Phasenvermittler verwendet wird. Derartige Mischungen sind homogen und lassen sich problemlos zu Polyurethanen verarbeiten. Insbesondere bei der Herstellung von Polyurethan-Weichschaumstoffen werden bei der Verwendung derartiger Mischungen sehr gleichmäßige und feinzellige Schäume erhalten.

Weiterhin sind die unter Verwendung der erfindungsgemäßen-Polyester-Polyetherblockcopolymere hergestellten Schaumstoffe in der Regel gut flammkaschierbar.

Daneben können die erfindungsgemäßen Polyester-Polyetherblockcopolymere auch außerhalb der Polyurethanchemie eingesetzt werden. Mögliche Einsatzgebiete sind hierbei als Vernetzungskomponente in Harzen, wie Epoxidharzen, Polyesterharzen, als Tenside oder als Phasenvermittler in Polymerblends. Weiterhin können die erfindungsgemäßen Polyester-Polyetherblockcopolymere auch als thermoplastische Polymere eingesetzt weden. Hierzu kommen insbesondere Polyester-Polyetherblockcopolymere zur Anwendung, die in ihrem Molekül keine freien funktionellen Gruppen aufweisen.

Darüber hinaus können die erfindungsgemäßen Polyester-Polyetherblockcopolymere durch Umsetzung mit weiteren Verbindungen funktionalisiert werden, wie beispielsweise durch Umsetzung mit Epichlorhydrin und α,β±ungesättigten Verbindungen wie beispielsweise Acrylsäure und Methacrylsäure.

Die mit α,β±ungesättigten Verbindungen funktionalisierten Polyester-Polyetherblockcopolymere können durch verschiedene, dem Fachmann bekannte Methoden vernetzt werden.

### Beispiele - Herstellung der Polyester-Polyetherblockcopolymer

### Beispiel 1: Herstellung des Polyesterols A

In einem Laborrührreaktor wurden 216 g Monopropylenglykol (2,84 Mol) mit 377 g Adipinsäure (2,58 Mol) versetzt und bis zur vollständigen Verflüssigung des Reaktionsgemisches auf 130°C aufgeheizt. Unter weiterer Erwärmung des Reaktionsgemisches auf 200°C wurden 93 ml Reaktionswasser unter Normaldruck destillativ entfernt. Danach wurden 10 ppm n-Butyltitanat als Katalysator zugesetzt. Bei einer Säurezahl von weniger als 2 mgKOH/g wurde die Reaktion beendet. Das entstandene klare Polyesterol A wies folgende Kennzahlen auf:

| | |
|---|---|
| Hydroxylzahl = | 55,5 mgKOH/g |
| Säurezahl = | 1,83 mgKOH/g |
| Viskosität = | 1060 mPa·s bei 75°C |
| Wassergehalt = | 0,039% |

### Beispiel 2: Herstellung des Polyesterols B

In einem Laborrührreaktor wurden 798 g Diethylenglykol (7,53 Mol) mit 897 g Adipinsäure (6,14 Mol) versetzt und bis zur vollständigen Verflüssigung des Reaktionsgemisches auf 130°C aufgeheizt. Unter weiterer Erwärmung des Reaktionsgemisches auf 200°C wurden 197 ml Reaktionswasser unter Normaldruck destillativ entfernt danach 10 ppm n-Butyltitanat als Katalysator zugesetzt. Bei einer Säurezahl von weniger als 2 mgKOH/g wurde die Reaktion beendet. Das entstandene klare Polyesterol B wies folgende Kennzahlen auf:

| | |
|---|---|
| Hydroxylzahl = | 227 mg KOH/g |
| Säurezahl = | 0,35 mg KOH/g |
| Viskosität = | 60 mPa·s bei 75°C |
| Wassergehalt = | 0,024% |

### Beispiel 3: Herstellung des DMC-Katalysators

479,3 g einer wäßrigen Zinkacetat-Lösung (13,38 g Zinkacetat-Dihydrat und 2,2 g Pluronic® PE 6200 (BASF Aktiengesellschaft) gelöst in 150 g Wasser) wurden auf 50°C temperiert. Unter Rühren (Schraubenrührer, Rührenergieeintrag: 1 W/l) wurde anschließend innerhalb von 20 min eine wäßrige Hexacyanocobaltatsäure-Lösung (Cobaltgehalt: 9 g/l, 1,5 Gew.-% Pluronic® PE 6200 bezogen auf die Hexacyanocobaltatsäure-Lösung) zudosiert. Nach vollständiger Dosierung der Hexacyanocobaltatsäure wurde weitere 5 min bei 50°C weitergerührt. Anschließend wurde die Temperatur innerhalb einer Stunde auf 40°C gesenkt.

Der gefällte Feststoff wurde über eine Druckfilternutsche von der Flüssigkeit abgetrennt und mit Wasser gewaschen.

Der wasserfeuchte Filterkuchen wurde anschließend in soviel Wasser dispergiert, daß eine 5 gew.-%ige Multimetallcyanidsuspension entstand.

### Beispiel 4: Herstellung eines Polyester-Polyetherblockcopolymers

In einem 250-ml-Rührautoklaven wurden in 130 g Polyesterol A 2,0 g des DMC-Katalysators gemäß Beispiel 3 bei 110°C dispergiert. Danach wurde die Suspension 2 Stunden bei 3 mbar evakuiert. Anschließend wurde das Reaktionsgemisch mit 10 bar Stickstoffüberdruck inertisiert. Bei einem Autoklavendruck von 0,5 bar Stickstoff und einer Temperatur von 130°C erfolgte danach die Zugabe von 70 g Propylenoxid mit einem Stickstoffvordruck von 10 bar innerhalb 5 Minuten. Nach 2 Stunden wurde das Reaktionsgemisch bei einem Unterdruck von 5 mbar und einer Temperatur von 100°C entgast und anschließend erfolgte Aufarbeitung durch Filtration. Das erhaltene Produkt wies folgende Kenndaten auf:

| | |
|---|---|
| Hydroxylzahl = | 35,9 mg KOH/g |
| Säurezahl = | 0,1 mg KOH/g |
| Viskosität = | 750 mPa·s bei 75°C |
| M_{W} = | 3.100 g/mol |

### Beispiel 5: Herstellung eines Polyester-Polyetherblockcopolymers

In einem 250-ml-Rührautoklaven wurden in 130 g Polyesterol B 1,0 g des DMC-Katalysators gemäß Beispiel 3 bei 110°C dispergiert. Danach wurde die Suspension 2 Stunden bei 3 mbar evakuiert. Anschließend wurde das Reaktionsgemisch mit 10 bar Stickstoffüberdruck inertisiert. Danach erfolgte die Zugabe von 70 g Propylenoxid bei einer Temperatur von 130°C. Nach 3 Stunden wurde das Reaktionsgemisch bei einem Unterdruck von 4 mbar und bei einer Temperatur von 90°C entgast. Das erhaltene Produkt wies folgende Kenndaten auf:

| | |
|---|---|
| Hydroxylzahl = | 148,1 mg KOH/g |
| Säurezahl = | 0,2 mg KOH/g |
| Viskosität = | 40 mPa·s bei 75°C |
| M_{W} = | 756 g/mol |

### Beispiel 6: Herstellung eines Polyurethan-Blockweichschaumstoffes

400 g Lupranol® 2080, ein Polyetherol der Firma BASF mit einer Hydroxylzahl von 48 mgKOH/g und 400 g Lupraphen® 8190, ein Polyesterol der Firma BASF mit einer Hydroxylzahl von 61 mgKOH/g, und 200 g des Polyetherols gemäß Beispiel 4 wurden mit einem Rührer innig vermischt. Die erhaltene leicht trübe Dispersion zeigte auch nach mehr als 50 Tagen keine Phasenseparation.

1000 g dieser Polyolmischung wurden mit 38 g Wasser, 10 g Tegostab® BF 2370 (Silikonstabilisator der Firma Goldschmidt AG), 0,12 g Lupragen® N201, 0,4 g Lupragen® N206 (Aminkatalysatoren der Firma BASF Aktiengesellschaft) und 2,0 g Kosmos® 29 (Zinnkatalysator der Firma Goldschmidt AG) mit einem Rührer vermischt. Danach wurde 491,9 g Lupranat® T80 A, ein 2,4-/2,6-Toluylendiisocyanatgemisch der Firma BASF Aktiengesellschaft unter Rühren hinzugegeben und die Reaktionsmischung in eine offene Kastenform (400 x 400 x 400 mm) vergossen, worin sie zum Polyurethan-Schaumstoff ausschäumte. Es wurde ein feinzelliger, homogener und offenzelliger Weichschaum erhalten.

## Patentansprüche

1. Polyester-Polyetherblockcopolymere, hergestellt durch katalytische Anlagerung von Alkylenoxiden an H-funktionelle Startsubstanzen, **dadurch gekennzeichnet, daß** als H-funktionelle Startsubstanzen Polyesteralkohole und als Katalysatoren Multimetallcyanidverbindungen eingesetzt werden.

2. Polyester-Polyetherblockcopolymere nach Anspruch 1, **dadurch gekennzeichnet, daß** die Polyesteralkohole durch Umsetzung von mehrfunktionellen Alkoholen mit mehrfunktionellen Carbonsäuren hergestellt werden.

3. Polyester-Polyetherblockcopolymere nach Anspruch 1, **dadurch gekennzeichnet, daß** die Polyesteralkohole ein Molekulargewicht M_{W} im Bereich zwischen 250 und 200000 aufweisen.

4. Polyester-Polyetherblockcopolymere nach Anspruch 1, **dadurch gekennzeichnet, daß** als Multimetallcyanidkatalysatoren solche der allgemeinen Formel (I)
M¹ ₐ[M²(CN)_{b}(A)_{c}]_{d} · fM¹gXₙ · h(H2O) · eL (I),
wobei
M1 ein Metallion, ausgewählt aus der Gruppe, enthaltend Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
M2 ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M1 und M2 gleich oder verschieden sind,
A ein Anion, ausgewählt aus der Gruppe, enthaltend Halogenid. Hydroxyd, Sulfat, Carbonat, Cyanid, Thiocyanat, Isocyanat, Cyanat, Carboxylat, Oxalat oder Nitrat,
x ein Anion, ausgewählt aus der Gruppe, enthaltend Halogenid. Hydroxyd, Sulfat, Carbonat, Cyanid, Thiocyanat, Isocyanat, Cyanat, Carboxylat, Oxalat oder Nitrat,
L ein mit Wasser mischbarer Ligand, ausgewählt aus der Gruppe, enthaltend Alkohole, Aldehyde, Ketone, Ether, Polyether, Ester, Harnstoffe, Amide, Nitrile und Sulfide,
bedeuten, sowie
a, b, c, d, g und n so ausgewählt sind, daß die Elektroneutralität der Verbindung gewährleistet ist, und
e die Koordinationszahl des Liganden,
f eine gebrochene oder ganze Zahl größer oder gleich 0
h eine gebrochene oder ganze Zahl größer oder gleich 0
bedeuten,
eingesetzt werden.

5. Polyester-Polyetherblockcopolymere nach Anspruch 1 **dadurch gekennzeichnet, daß** als Alkylenoxide Ethylenoxid, Propylenoxid, Butylenoxid oder beliebige Mischungen aus mindestens zwei der genannten Alkylenoxide eingesetzt werden.

6. Polyester-Polyetherblockcopolymere nach Anspruch 1, **dadurch gekennzeichnet, daß** das Verhältnis von Ethergruppen zu Estergruppen im Molekül im Bereich zwischen 0,01 und 100 liegt.

7. Polyester-Polyetherblockcopolymere nach Anspruch 1, **dadurch gekennzeichnet, daß** das Molekulargewicht M_{W} im Bereich zwischen 300 und 300.000 liegt.

8. Verfahren zur Herstellung von Polyester-Polyetherblockcopolymeren, **dadurch gekennzeichnet, daß** an mindestens ein Polyesteralkohol im Beisein eines Multimetallcyanidkatalysators mindestens ein Alkylenoxid angelagert wird.

9. Verwendung von Polyester-Polyetherblockcopolymeren nach einem der Ansprüche 1 bis 7 als Polyolkomponente zur Herstellung von Polyurethanen.

10. Verwendung von Polyester-Polyetherblockcopolymeren nach einem der Ansprüche 1 bis 7 als Verträglichkeitsvermittler zwischen Polyetheralkoholen und Polyesteralkoholen in Polyurethansystemen.

11. Verwendung von Polyester-Polyetherblockcopolymeren nach einem der Ansprüche 1 bis 7 als Vernetzungskomponente in Harzen, wie Epoxidharzen, Polyesterharzen.

12. Verwendung von Polyester-Polyetherblockcopolymeren nach einem der Ansprüche 1 bis 7 als Tenside.

13. Verwendung von Polyester-Polyetherblockcopolymeren nach einem der Ansprüche 1 bis 7 als Phasenvermittler in Polymerblends.

14. Verfahren zur Herstellung von Polyurethanen durch Umsetzung von Polyisocyanaten mit Verbindungen mit mindestens zwei mit Isocyanatgruppen reaktiven Wasserstoffatomen, **dadurch gekennzeichnet, daß** als Verbindungen mit mindestens zwei mit Isocyanatgruppen reaktiven Wasserstoffatomen Polyester-Polyetherblockcopolymere gemäß einem der Ansprüche 1 bis 7 eingesetzt werden.

15. Lagerstabile Polyolkomponente zur Herstellung von Polyurethanen, enthaltend mindestens einen Polyetheralkohol und mindestens einen Polyesteralkohol, **dadurch gekennzeichnet, daß** sie als Verträglichkeitsvermittler mindestens ein Polyester-Polyetherblockcopolymer gemäß einem der Ansprüche 1 bis 7 enthält.

16. Polyurethane, herstellbar nach Anspruch 14.

## Claims

1. A polyester-polyether block copolymer which is prepared by catalytic addition of alkylene oxides onto H-functional initiator substances, wherein polyester alcohols are used as H-functional initiator substances and multimetal cyanide compounds are used as catalysts.

2. A polyester-polyether block copolymer as claimed in claim 1, wherein the polyester alcohols are prepared by reacting polyfunctional alcohols with polyfunctional carboxylic acids.

3. A polyester-polyether block copolymer as claimed in claim 1, wherein the polyester alcohols have a molecular weight M_{W} in the range from 250 to 200,000.

4. A polyester-polyether block copolymer as claimed in claim 1, wherein the multimetal cyanide catalysts used have the formula (I)
M¹ ₐ[M²(CN)_{b}(A)_{c}]_{d} · fM¹gXₙ · h(H₂O) · eL (I),
where
M¹ is a metal ion selected from the group consisting of Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
M² is a metal ion selected from the group consisting of Fe2+, Fe3+, Co2+, Co3+, Mn2+, Mn3+, V4+, V5+, Cr2+, Cr3+, Rh3+, Ru2+, Ir3+,
and M1 and M2 are identical or different,
A is an anion selected from the group consisting of halide, hydroxide, sulfate, carbonate, cyanide, thiocyanate, isocyanate, cyanate, carboxylate, oxalate and nitrate,
X is an anion selected from the group consisting of halide, hydroxide, sulfate, carbonate, cyanide, thiocyanate, isocyanate, cyanate, carboxylate, oxalate and nitrate,
L is a water-miscible ligand selected from the group consisting of alcohols, aldehydes, ketones, ethers, polyethers, esters, ureas, amides, nitriles and sulfides,
a, b, c, d, g and n are selected so that the compound is electrically neutral, and
e is the coordination number of the ligand,
f is a fraction or integer greater than or equal to 0,
h is a fraction or integer greater than or equal to 0.

5. A polyester-polyether block copolymer as claimed in claim 1, wherein the alkylene oxides used are ethylene oxide, propylene oxide, butylene oxide or any mixtures of at least two of the alkylene oxides mentioned.

6. A polyester-polyether block copolymer as claimed in claim 1, wherein the ratio of ether groups to ester groups in the molecule is in the range from 0.01 to 100.

7. A polyester-polyether block copolymer as claimed in claim 1, wherein the molecular weight M_{W} is in the range from 300 to 300,000.

8. A process for preparing polyester-polyether block copolymers, which comprises adding at least one alkylene oxide onto at least one polyester alcohol in the presence of a multimetal cyanide catalyst.

9. The use of a polyester-polyether block copolymer as claimed in any of claims 1 to 7 as polyol component for producing polyurethanes.

10. The use of a polyester-polyether block copolymer as claimed in any of claims 1 to 7 as compatibilizer between polyether alcohols and polyester alcohols in polyurethane systems.

11. The use of a polyester-polyether block copolymer as claimed in any of claims 1 to 7 as crosslinker component in resins such as epoxy resins and polyester resins.

12. The use of a polyester-polyether block copolymer as claimed in any of claims 1 to 7 as surfactant.

13. The use of a polyester-polyether block copolymer as claimed in any of claims 1 to 7 as phase compatibilizer in polymer blends.

14. A process for producing polyurethanes by reacting polyisocyanates with compounds containing at least two hydrogen atoms which are reactive toward isocyanate groups, wherein polyester-polyether block copolymers as claimed in any of claims 1 to 7 are used as compounds containing at least two hydrogen atoms which are reactive toward isocyanate groups.

15. A storage-stable polyol component for producing polyurethanes, comprising at least one polyether alcohol and at least one polyester alcohol and, as compatibilizer, at least one polyester-polyether block copolymer as claimed in any of claims 1 to 7.

16. A polyurethane which can be produced as claimed in claim 14.

## Revendications

1. Copolymères séquencés de polyesters-polyéthers préparés par fixation par addition catalytique d'oxydes d'alkylènes à des substances d'amorçage à fonctionnalité hydrogène, **caractérisé en ce qu'**on met en oeuvre, à titre de substances d'amorçage à fonctionnalité hydrogène, des polyester-alcools et, à titre de catalyseurs, des composés de cyanures multimétalliques.

2. Copolymères séquencés de polyesters-polyéthers selon la revendication 1, **caractérisés en ce qu'**on prépare les polyester-alcools par mise en réaction d'alcools polyfonctionnels avec des acides carboxyliques polyfonctionnels.

3. Copolymères séquencés de polyesters-polyéthers selon la revendication 1, **caractérisés en ce que** les polyester-alcools présentent un poids moléculaire M_{W} dans la plage entre 250 et 200.000.

4. Copolymères séquences de polyesters-polyéthers selon la revendication 1, **caractérisés en ce qu'**on met en oeuvre, à titre de catalyseurs à base de cyanures multimétalliques, ceux répondant à la formule générale (l)
M¹ ₐ[M²(CN)_{b}(A)_{c}]_{d} · fM¹ _{g}Xₙ · h(H₂O) · eL (I)
dans laquelle
M¹ représente un ion métallique choisi parmi le groupe contenant Zn2+, Fe2+, Co3+, Ni2+, Mn2+, Co2+, Sn2+, Pb2+, Mo4+, Mo6+, Al3+, V4+, V5+, Sr2+, W4+, W6+, Cr2+, Cr3+, Cd2+,
M² représente un ion métallique choisi parmi le groupe contenant Fe2+, Fe3+, Co2+, Co3+, Mn2+, Mn3+, V4+, V5+, Cr2+, Cr3+, Rh3+, Ru2+, lr3+
et, M¹ et M² sont identiques ou différents,
A représente un anion choisi parmi le groupe contenant un halogénure, un hydroxyde, un sulfate, un carbonate, un cyanure, un thiocyanate, un isocyanate, un cyanate, un carboxylate, un oxalate ou un nitrate,
X représente un anion choisi parmi le groupe contenant un halogénure, un hydroxyde, un sulfate, un carbonate, un cyanure, un thiocyanate, un isocyanate, un cyanate, un carboxylate, un oxalate ou un nitrate,
L représente un ligand miscible à l'eau, choisi parmi le groupe contenant des alcools, des aldéhydes, des cétones, des éthers, des polyéthers, des esters, des urées, des amides, des nitriles et des sulfures,
de même que
a, b, c, d, g et n sont choisis de telle sorte que la neutralité électrique du composé est garantie, et
e représente l'indice de coordination du ligand,
f représente un nombre fractionnaire ou un nombre entier supérieur ou égal à zéro,
h représente un nombre fractionnaire ou un nombre entier supérieur ou égal à zéro.

5. Copolymères séquences de polyesters-polyéthers selon la revendication 1, **caractérisés en ce qu'**on met en oeuvre, à titre d'oxydes d'alkylènes, l'oxyde d'éthylène, l'oxyde de propylène, l'oxyde de butylène ou encore n'importe quels mélanges constitués par au moins deux des oxydes d'alkylènes mentionnés.

6. Copolymères séquencés de polyesters-polyéthers selon la revendication 1, **caractérisés en ce que** le rapport des groupes éthers aux groupes esters dans la molécule se situe dans la plage entre 0,01 et 100.

7. Copolymères séquencés de polyesters-polyéthers selon la revendication 1, **caractérisés en ce que** le poids moléculaire M_{W} se situe dans la plage entre 300 et 300.000.

8. Procédé pour la préparation de copolymères séquencés de polyesters-polyéthers, **caractérisé en ce qu'**on fixe par addition, sur au moins un polyester-alcool, en présence d'un catalyseur à base de cyanure multimétallique, au moins un oxyde d'alkylène.

9. Utilisation de copolymères séquencés de polyesters-polyéthers selon l'une quelconque des revendications 1 à 7, comme composant de polyols pour la préparation de polyuréthanes.

10. Utilisation de copolymères séquencés de polyesters-polyéthers selon l'une quelconque des revendications 1 à 7, comme agents de compatibilisation entre des polyéther-alcools et des polyester-alcools dans des systèmes de polyuréthanes.

11. Utilisation de copolymères séquences de polyesters-polyéthers selon l'une quelconque des revendications 1 à 7, comme agents de réticulation dans des résines telles que des résines époxydes et des résines de polyesters.

12. Utilisation de copolymères séquences de polyesters-polyéthers selon l'une quelconque des revendications 1 à 7, comme agents tensioactifs.

13. Utilisation de copolymères séquences de polyesters-polyéthers selon l'une quelconque des revendications 1 à 7, comme agents de séparation de phases dans des mélanges polymères.

14. Procédé pour la préparation de polyuréthanes par mise en réaction de polyisocyanates avec des composés comprenant au moins deux atomes d'hydrogène réactifs vis-à-vis de groupes isocyanates, **caractérisé en ce qu'**on met en oeuvre à titre de composés comprenant au moins deux atomes d'hydrogène réactifs vis-à-vis de groupes isocyanates, des copolymères séquences de polyesters-polyéthers selon l'une quelconque des revendications 1 à 7.

15. Composant de polyol stable à l'entreposage pour la préparation de polyuréthanes, contenant au moins un polyéther-alcool et au moins un polyester-alcool, **caractérisé en ce qu'**il contient, à titre d'agent de compatibilisation, au moins un copolymère séquence de polyester-polyéther selon l'une quelconque des revendications 1 à 7.

16. Polyuréthanes, que l'on peut préparer conformément à la revendication 14.
